# FASCICULE DE BREVET EUROPEEN

(11) **EP 2 769 395 B1**
(45) Date de publication et mention de la délivrance du brevet: **06.01.2016**
(21) Numéro de dépôt: 12775496.8
(22) Date de dépôt: 18.10.2012
(51) Int. Cl.: H01G 11/36, H01G 11/28

(54) **ASSEMBLAGE COLLECTEUR-ÉLECTRODE APTE À ÊTRE INTÉGRÉ DANS UN DISPOSITIF DE STOCKAGE D'ÉNERGIE ÉLECTRIQUE**
KOLLEKTOR-ELEKTRODEN-ANORDNUNG ZUM EINBAU IN EINE STROMSPEICHERVORRICHTUNG
COLLECTOR-ELECTRODE ASSEMBLY WHICH CAN BE INTEGRATED INTO AN ELECTRICAL ENERGY STORAGE DEVICE

(30) Priorité: 18.10.2011 FR 1103181
(43) Date de publication de la demande: 27.08.2014
(73) Titulaire: THALES, 92200 Neuilly-sur-Seine (FR); Commissariat à l'Énergie Atomique et aux Énergies Alternatives, 75015 Paris (FR)
(72) Inventeur: LEGAGNEUX, Pierre, 91767 Palaiseau Cedex (FR); BERGONZO, Philippe, 91191 Gif Sur Yvette Cedex (FR); BONDAVALLI, Paolo, 91767 Palaiseau Cedex (FR); MAZELLIER, Jean-Paul, 91767 Palaiseau Cedex (FR); SCORSONE, Emmanuel, 91191 Gif Sur Yvette Cedex (FR)
(74) Mandataire: Blot, Philippe Robert Emile
(86) Numéro de dépôt international: PCT/EP2012/070700
(87) Numéro de publication internationale: WO 2013/057218

(56) Documents cités:
- WO-A1-2010/053200
- US-A1- 2005 219 788
- US-A1- 2010 255 381

## Description

La présente invention concerne un assemblage collecteur-électrode apte à être intégré dans un dispositif de stockage d'énergie électrique, un dispositif de stockage d'énergie et un procédé de fabrication associés.

Un dispositif de stockage d'énergie électrique appelé « supercapacité », « supercondensateur » ou EDLC (Electric Double Layer Capacitors, condensateur électrique à double couche) comporte deux ensembles collecteur-électrode séparés par un électrolyte et un séparateur. Chaque ensemble collecteur-électrode comporte un collecteur de courant qui est hautement conducteur, et une électrode comportant une couche à surface augmentée, par exemple en carbone actif, dont la surface augmentée s'élève à environ 3000m² par gramme. Cette surface augmentée est généralement déterminée par la méthode BET (Brunauer-Emmett-Teller) qui consiste à mesurer l'adsorption physique avec un gaz inerte (physisorption). On notera que la surface active est inférieure à la surface augmentée déduite par la méthode BET. Les électrodes sont placées en regard, espacées par un séparateur qui permet le passage d'ions d'une électrode vers l'autre et l'isolation électrique entre les deux électrodes. Les électrodes sont au contact d'un électrolyte, qui est soit organique, soit aqueux, et permet la conduction ionique d'une électrode à l'autre.

Un exemple d'un dispositif EDLC est décrit dans US 2010/255381.

Plus récemment ont été développées des électrodes dont la surface active est obtenue par une couche nanostructurée, par exemple formée de nanotubes de carbone, ce qui a permis d'augmenter la surface active et par conséquent la performance des dispositifs de stockage d'énergie.

Ces dispositifs de stockage d'énergie permettent de délivrer une puissance instantanée élevée, ce qui permet de nombreuses utilisations industrielles, par exemple pour l'alimentation de moteurs électriques de propulsion de véhicules hybrides.

En particulier, un des objectifs à atteindre dans le domaine des dispositifs de stockage d'énergie de ce type est l'augmentation de la densité d'énergie stockée, de manière à obtenir un dispositif à forte capacité et à faible volume. L'énergie stockée dans un tel dispositif de stockage d'énergie ou supercondensateur dépend de la capacité C et de la tension maximum de fonctionnement V, selon la formule E=1/2CV². Il est donc particulièrement avantageux de fonctionner à tension élevée.

La tension de fonctionnement du supercondensateur est liée à la tension de dissociation de l'électrolyte utilisé, en relation avec la couche active au contact de l'électrolyte. Il est connu qu'avec une couche active en graphite ou en carbone actif, la tension ou fenêtre de potentiel d'un électrolyte aqueux est limitée à environ 1,4V alors qu'elle atteint 2,5V et plus avec un électrolyte organique. Néanmoins, les électrolytes organiques ont une conductivité ionique plus faible que les électrolytes aqueux, ce qui réduit la puissance disponible de ce dispositif de stockage d'énergie électrique. De plus, l'utilisation d'électrolytes organiques doit se faire en milieu anhydre, ce qui rend la synthèse de tels électrolytes plus complexe. Enfin, certains solvants organiques, comme par exemple l'acetonitrile, sont polluants et dangereux pour la santé.

Un but de l'invention est de remédier aux inconvénients de l'état de la technique, en proposant des assemblages collecteur-électrode pour dispositifs de stockage d'énergie électrique qui soient performants en termes de capacité de stockage d'énergie, tout en permettant l'utilisation d'un électrolyte de type aqueux, à forte conductivité ionique et sans danger pour l'environnement et la santé.

A cet effet, l'invention propose, selon un premier aspect, un assemblage collecteur-électrode apte à être intégré dans un dispositif de stockage d'énergie électrique, comportant en superposition un collecteur fortement conducteur comportant un substrat et une électrode comportant une couche active nanostructurée formée d'un réseau de nanostructures. Dans cet assemblage collecteur-électrode, la couche active nanostructurée est recouverte d'une couche comportant des nanoparticules de diamant.

Avantageusement, un assemblage collecteur-électrode dont l'électrode comprend une couche de nanoparticules de diamant ou nanodiamant permet d'obtenir une tension de fonctionnement de l'ordre de 3V avec un solvant aqueux et de 4-5V avec un solvant de type liquide ionique. La conductivité des solvants aqueux est forte. La combinaison d'une couche active nanostructurée avec une couche de nanodiamant permet ainsi d'obtenir une électrode à surface active élevée et à fenêtre de potentiel importante.

L'assemblage collecteur-électrode apte à être intégré dans un dispositif de stockage de l'énergie électrique selon l'invention peut également présenter une ou plusieurs des caractéristiques ci-dessous :
- le réseau de nanostructures est formé de nanostructures érigées en croissance sur la surface du substrat et espacées entre elles d'une distance supérieure à une distance minimale prédéterminée ;
- ladite distance minimale prédéterminée est supérieure ou égale à trois fois le diamètre maximal des nanoparticules de diamant ;
- les nanostructures ont une forme géométrique parmi l'une des formes géométriques suivantes : tubulaire, filaire, conique ;
- les nanostructures sont en carbone ;
- la couche de nanoparticules de diamant est obtenue par dépôt en phase vapeur à partir de la décomposition d'un gaz carboné ;
- la couche de nanoparticules de diamant est dopée au bore,
- le substrat est formé d'une feuille métallique souple.

Selon un deuxième aspect, l'invention a pour objet un dispositif de stockage d'énergie électrique comportant deux assemblages collecteur-électrode tels que brièvement décrits ci-dessus, positionnés en regard, les électrodes étant en contact avec un électrolyte et séparées par un séparateur, caractérisé en ce que ledit électrolyte est un électrolyte aqueux.

Selon un troisième aspect, l'invention propose un procédé de fabrication d'un assemblage collecteur-électrode tel que brièvement décrit ci-dessus, apte à être intégré dans un dispositif de stockage d'énergie électrique. Le procédé de fabrication selon l'invention comporte les étapes suivantes :
- dépôt d'une monocouche d'un polymère organique chargé, par trempage d'un substrat recouvert d'un réseau de nanostructures dans une solution aqueuse dudit polymère, rinçage dans de l'eau dé-ionisée puis séchage sous flux d'argon,
- trempage du substrat recouvert d'un réseau de nanostructures obtenu après application des étapes précédentes dans une solution aqueuse ou alcoolique de nanoparticules de diamant comportant une charge de surface opposée à celle du polymère déposé, et
- croissance par dépôt en phase vapeur à partir de la décomposition d'un gaz carboné, la température du substrat comportant le réseau de nanostructures étant inférieure ou égale à 600°C, la pression étant comprise entre 20 mBar et 200 mBar, la croissance étant arrêtée lorsqu'un film couvrant de nanoparticules de diamant est obtenu.

Selon un mode de réalisation, le gaz carboné est composé d'hydrogène et de méthane.

D'autres caractéristiques et avantages de l'invention ressortiront de la description qui en est donnée ci-dessous, à titre indicatif et nullement limitatif, en référence aux figures annexées, parmi lesquelles :
- la figure 1 est une vue schématique en coupe longitudinale d'un dispositif de stockage d'énergie comprenant deux ensembles collecteur-électrode ;
- la figure 2 est un exemple de réseau de nanostructures conforme à l'invention,
- la figure 3 est une vue en coupe transversale d'un assemblage collecteur-électrode selon l'invention, et
- la figure 4 est un logigramme des étapes d'un procédé de fabrication d'une électrode selon un mode de réalisation de l'invention, et
- la figure 5 illustre schématiquement des résultats intermédiaires des principales étapes du procédé de fabrication de la figure 4.

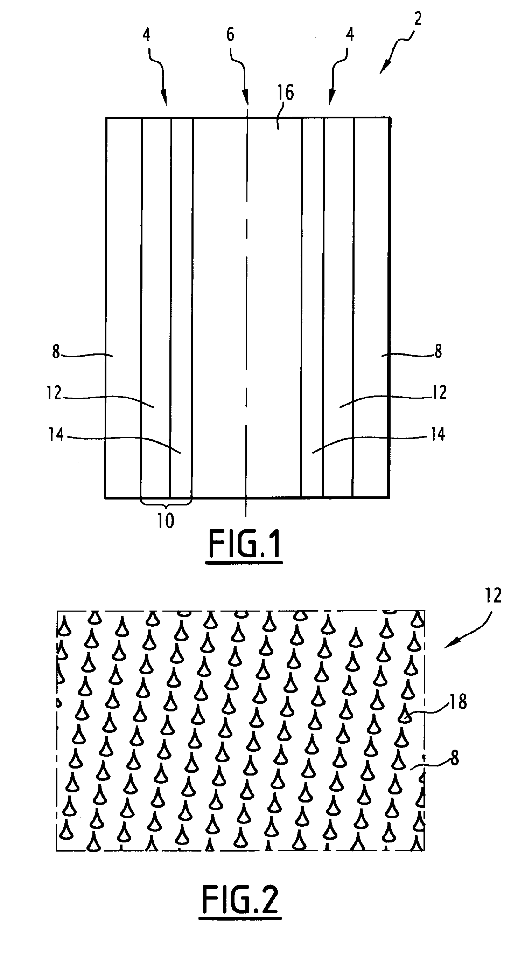

La Figure 1 représente un dispositif de stockage d'énergie 2 selon l'invention, comprenant deux assemblages collecteur-électrode 4 disposés en regard l'un de l'autre et séparées par un séparateur 6.

Chaque assemblage collecteur-électrode 4 est multicouche et comprend en superposition un collecteur 8 composé d'un substrat électriquement conducteur, et la partie électrode 10, composée d'une couche nanostructurée 12 et d'une couche 14 comportant une couche de nanodiamant 14, recouvrant la couche 12.

Les assemblages collecteur-électrode 4 sont disposés en regard avec leurs électrodes 10 adjacentes, en contact avec un électrolyte 16 et séparées par le séparateur 6.

Le séparateur 6 a pour fonction d'assurer une isolation électrique entre les électrodes 10 tout en laissant passer les ions. De manière générale, on peut utiliser tout séparateur conventionnel dans un supercondensateur à puissance instantanée élevée. Le séparateur 6 comprend par exemple une membrane poreuse.

La membrane est généralement à base de polymères, par exemple de Nafion®.

Le collecteur 8 de chaque assemblage collecteur-électrode 4 est formé d'un matériau électriquement conducteur, par exemple du silicium dopé éventuellement recouvert d'une couche métallique, ou peut être un substrat métallique. On notera que dans un mode de réalisation ce substrat métallique 8 est souple, son épaisseur étant faible, typiquement inférieure à 100 micromètres (µm). Par exemple, le substrat est formé d'une feuille souple d'inox.

La couche nanostructurée 12 de l'électrode 10 de chaque assemblage collecteur-électrode 4 est formée d'un réseau, également appelé forêt, de nanostructures, qui sont par exemple des nanotubes, des nano-cylindres ou des nanofils, les nanostructures étant formées en saillie sur le substrat 8.

Par « nanostructures», on entend des particules dont au moins la plus petite des dimensions est nanométriques, c'est-à-dire comprises entre 1 nanomètre (nm) et 100 nm.

Selon un mode de réalisation préféré de l'invention, les nanostructures sont fabriquées en carbone (C). De manière connue, les nanotubes de carbone (NTC) sont formés d'un feuillet de graphène enroulé en un tube (Single Wall Nanotube, SWNT) ou de plusieurs feuillets concentriques de graphène (Multiwall Nanotube, NWNT). Le graphène est un cristal bidimensionnel de carbone d'épaisseur monoatomique.

Alternativement, d'autres matériaux sont utilisés pour la fabrication de nanostructures, par exemple nanofils de semiconducteur (par ex. silicium) dopés, nanofils métalliques.

La couche nanostructurée 12 est recouverte d'une couche de nanodiamant 14, comportant des nanoparticules monocristallines, ayant un diamètre compris entre 5 nm et 100 nm, et de préférence dans la plage 5 nm à 30 nm.

La couche de nanodiamant est dopée au bore afin d'assurer une bonne conductivité électrique.

En variante, la couche de nanodiamant est dopée à l'azote N ou au phosphore P. Dans le cas de couches très minces le dopage n'est pas nécessaire.

Grâce à la présence de la couche de nanodiamant 14 recouvrant la couche nanostructurée 12, l'électrolyte 16 est un électrolyte aqueux, ou un liquide ionique.

La fenêtre de potentiel du nanodiamant permet un fonctionnement à 3V en utilisant l'eau comme électrolyte et à 4-5V en utilisant un liquide ionique comme électrolyte, avec un dopage au bore de concentration 10²¹ atomes de bore par centimètre cube (cm³). Lorsque le dopage au bore est d'environ 10¹⁹ atomes par cm³, la fenêtre de potentiel est d'environ 3,2 à 3,5V.

Ainsi, l'utilisation d'électrodes comportant une couche de nanodiamant permet d'obtenir de meilleures performances en termes de stockage d'énergie que pour un supercondensateur classique quelque soit l'électrolyte utilisé.

Un bon recouvrement de la couche nanostructurée 12 par la couche de nanodiamant 14 est obtenu lorsque l'espacement des nanostructures est suffisamment grand par rapport au diamètre des nanoparticules de diamant.

La figure 2 illustre un exemple de nanostructures à géométrie conique 18 érigées en croissance sur la surface du substrat 8. Les nanostructures sont érigées perpendiculairement à la surface substrat. Selon un mode de réalisation, les nanostructures ont des dimensions de 5 à 100 nm de diamètre et de quelques micromètres à quelques dizaines de micromètres de hauteur. Les nanostructures sont réparties semi-aléatoirement sur la surface du substrat 8, recouvrement appelé ici réseau ou forêt de nanostructures, avec une distance minimale entre deux nanostructures de 15 à 100 nm, de manière à permettre un recouvrement suffisamment dense par des nanoparticules de diamant d'un diamètre de l'ordre de 5 nm à 30 nm.

De manière générale, la distance minimale entre les nanostructures est choisie supérieure ou égale à n fois le diamètre maximal des nanoparticules de diamant, avec de préférence n=3, pour permettre un bon recouvrement de la couche nanostructurée par un film couvrant de nanodiamant.

Alternativement, les nanostructures sont des nanotubes, de forme tubulaire, cylindrique ou des nanofils unidimensionnels.

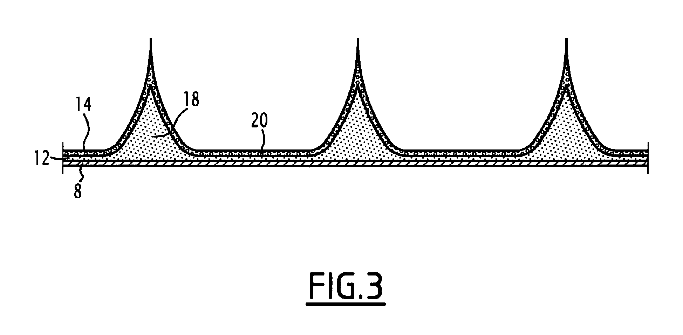

La figure 3 illustre en coupe transversale l'empilement de couches d'un assemblage collecteur-électrode, la couche nanostructurée 12, comportant des nanostructures de forme géométrique cylindrique ou coniques 18 dans cet exemple de réalisation, étant empilée sur le substrat 8, et recouverte de la couche 14 de nanoparticules de diamant 20.

La fabrication des réseaux ou forêts de nanostructures se fait, selon un mode de réalisation, par croissance sur le substrat 8 par un procédé de dépôt en phase vapeur (CVD pour « chemical vapor deposition »), assisté ou non par plasma. Cette croissance s'effectue sur des particules catalytiques, par exemple des nanoparticules de fer, cobalt ou nickel.

La formation de la couche de nanoparticules de diamant est faite, selon un mode de réalisation, par dépôt en phase vapeur à partir de la décomposition d'un gaz carboné tel que du méthane, de l'éthylène, de l'éthanol, de l'éthane ou du propane.

Le dépôt se fait à une température comprise entre 500°C et 900°C, dans une phase gazeuse composée de méthane et d'hydrogène à une pression de 20 à 200 mBar. Le matériau est dopé au bore pendant la croissance par addition dans la phase gazeuse d'un composé boré tel que le diborane ou le triméthylbore.

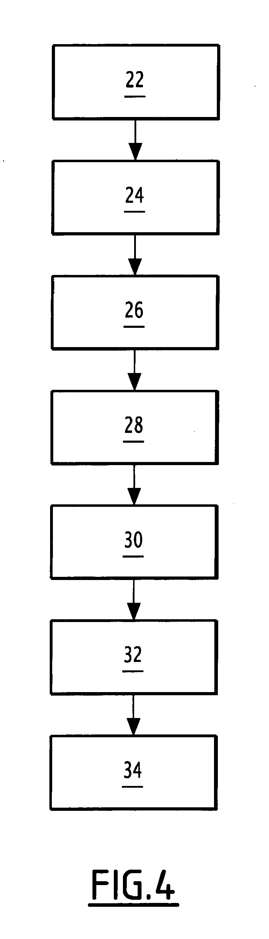

La figure 4 est un logigramme représentant les principales étapes d'un mode de réalisation d'un procédé de fabrication d'un assemblage collecteur-électrode selon l'invention, apte à être intégré dans dispositif de stockage d'énergie.

Une première étape 22 du procédé de fabrication consiste à déposer une monocouche d'un polymère organique chargé (anionique ou cationique) par trempage du substrat comportant les nanostructures 18, qui sont par exemple des nanotubes cylindriques, dans une solution aqueuse de ce même polymère.

Ensuite, à l'étape 24, est appliqué un rinçage dans l'eau dé-ionisée, puis séchage sous flux d'argon à l'étape 26.

Une fois le polymère déposé, le substrat nanostructuré est plongé à l'étape 28 dans une solution aqueuse ou alcoolique de nanoparticules de diamant comportant une charge de surface opposée à celle du polymère déposé sur les nanotubes de carbone. Par attraction électrostatique les particules de diamant viennent alors s'immobiliser sur les nanotubes de carbone 18 pour former une monocouche dense de nanoparticules de diamant.

Un rinçage 30 dans l'eau dé-ionisée et un séchage 32 sous flux d'argon sont appliqués.

Une fois les particules déposées, une croissance 34 de ces particules est réalisée dans un réacteur de croissance du diamant par CVD connu de l'homme du métier.

Un exemple de conditions de croissance est : puissance micro-ondes 500 W, gaz : 99% hydrogène - 1% méthane, pression 20 mBar, température du substrat 500°C. La croissance est arrêtée lorsqu'un film couvrant de diamant est obtenu.

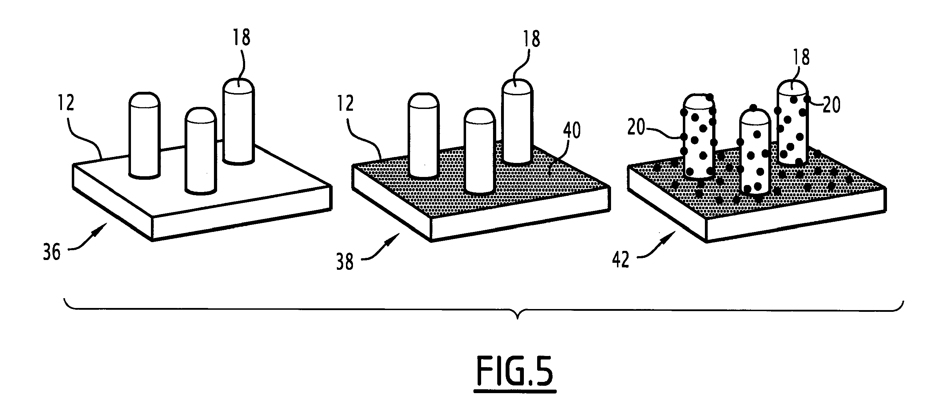

La figure 5 illustre schématiquement les résultats intermédiaires des principales étapes du procédé de fabrication selon l'invention.

Le substrat recouvert de la couche nanostructurée 12 composée de nanotubes de carbone 18, référencée par la référence 36, est trempée dans une solution polymère organique, par exemple le polymère cationique Poly(diallydimethylammoniumchloride) ou PDDAC.

Le résultat 38 obtenu après les étapes de rinçage à l'eau dé-ionisée 24 et de séchage sous flux d'argon 26 est illustré : le substrat et les nanostructures de carbone sont recouverts d'une monocouche de polymère 40.

Ensuite le substrat nanostructuré issu des étapes précédentes est trempé (étape 28) dans une solution de nanoparticules de diamant, chargées de charge opposée à celle du polymère, ici anionique.

Le résultat 42 de l'étape de trempage 28 illustré schématiquement montre les nanoparticules de diamant 20, immobilisées sur les nanotubes de carbone 18 et sur le substrat par attraction électrostatique.

Alternativement, des techniques basses températures de dépôt de nanomatériaux connues sont utilisées, telles que la filtration, l'induction centrifuge ou « spin coating », la pulvérisation ou « spray coating ».

## Revendications

1. Assemblage collecteur-électrode (4) apte à être intégré dans un dispositif (2) de stockage d'énergie électrique, comportant en superposition un collecteur fortement conducteur comportant un substrat (8) et une électrode (10) comportant une couche active nanostructurée (12) formée d'un réseau de nanostructures (18), **caractérisé en ce que** ladite couche active nanostructurée (12) est recouverte d'une couche (14) comportant des nanoparticules (20) de diamant.

2. Assemblage collecteur-électrode selon la revendication 1, **caractérisé en ce que** ledit réseau de nanostructures est formé de nanostructures (18) érigées en croissance sur la surface du substrat (8) et espacées entre elles d'une distance supérieure à une distance minimale prédéterminée.

3. Assemblage collecteur-électrode selon la revendication 2, **caractérisé en ce que** ladite distance minimale prédéterminée est supérieure ou égale à trois fois le diamètre maximal des nanoparticules de diamant.

4. Assemblage collecteur-électrode selon l'une quelconque des revendications précédentes, **caractérisé en ce que** lesdites nanostructures (18) ont une forme géométrique parmi l'une des formes géométriques suivantes : tubulaire, filaire, conique.

5. Assemblage collecteur-électrode selon l'une quelconque des revendications précédentes, **caractérisé en ce que** lesdites nanostructures (18) sont en carbone.

6. Assemblage collecteur-électrode selon l'une quelconque des revendications précédentes, **caractérisé en ce que** la couche (14) de nanoparticules de diamant est obtenue par dépôt en phase vapeur à partir de la décomposition d'un gaz carboné.

7. Assemblage collecteur-électrode selon l'une quelconque des revendications précédentes, **caractérisé en ce que** la couche (14) de nanoparticules de diamant est dopée au bore.

8. Assemblage collecteur-électrode selon l'une quelconque des revendications précédentes, **caractérisé en ce que** le substrat (8) est formé d'une feuille métallique souple.

9. Dispositif (2) de stockage d'énergie électrique **caractérisé en ce qu'**il comporte deux assemblages collecteur-électrode (4) selon l'une quelconque des revendications 1 à 8, positionnés en regard, les électrodes (10) étant en contact avec un électrolyte (16) et séparées par un séparateur (6), et **caractérisé en ce que** ledit électrolyte est un électrolyte aqueux.

10. Procédé de fabrication d'un assemblage collecteur-électrode (4) selon d'une quelconque des revendications 1 à 8, apte à être intégré dans un dispositif (2) de stockage d'énergie électrique, **caractérisé en ce qu'**il comporte les étapes suivantes :
- dépôt d'une monocouche d'un polymère organique chargé, par trempage (22) d'un substrat recouvert d'un réseau de nanostructures dans une solution aqueuse dudit polymère, rinçage (24) dans de l'eau dé-ionisée puis séchage (26) sous flux d'argon,
- trempage (28) du substrat recouvert d'un réseau de nanostructures obtenu après application des étapes précédentes dans une solution aqueuse ou alcoolique de nanoparticules de diamant comportant une charge de surface opposée à celle du polymère déposé, et
- croissance par dépôt en phase vapeur (34) à partir de la décomposition d'un gaz carboné, la température du substrat comportant le réseau de nanostructures étant inférieure ou égale à 600°C, la pression étant comprise entre 20 mBar et 200 mBar, la croissance étant arrêtée lorsqu'un film couvrant de nanoparticules de diamant est obtenu.

11. Procédé de fabrication selon la revendication 10, **caractérisé en ce que** le gaz carboné est composé d'hydrogène et de méthane.

## Patentansprüche

1. Kollektor-Elektroden-Anordnung (4), die in eine Speichervorrichtung (2) integrierbar ist, umfassend übereinander angeordnet einen stark leitenden Kollektor, der ein Substrat (8) umfasst und eine Elektrode (10), die eine nanostrukturierte aktive Schicht (12) umfasst, die von einem Nanostrukturnetz (18) gebildet ist, **dadurch gekennzeichnet, dass** die nanostrukturierte aktive Schicht (12) von einer Schicht (14) bedeckt ist, die Diamant-Nanopartikel (20) aufweist.

2. Kollektor-Elektroden-Anordnung nach Anspruch 1, **dadurch gekennzeichnet, dass** das Nanostrukturnetz von im Wachstum auf der Oberfläche des Substrats (8) aufgerichteten und voneinander in einem Abstand beabstandeten Nanostrukturen (18) gebildet ist, der größer als ein vorbestimmter Mindestabstand ist.

3. Kollektor-Elektroden-Anordnung nach Anspruch 2, **dadurch gekennzeichnet, dass** der vorbestimmte Mindestabstand größer oder gleich dem dreifachen maximalen Durchmesser der Diamant-Nanopartikel ist.

4. Kollektor-Elektroden-Anordnung nach einem der vorangehenden Ansprüche, **dadurch gekennzeichnet, dass** die Nanostrukturen (18) eine geometrische Form einer der folgenden geometrischen Formen aus Rohrförmig, Fadenförmig, Kegelförmig aufweisen.

5. Kollektor-Elektroden-Anordnung nach einem der vorangehenden Ansprüche, **dadurch gekennzeichnet, dass** die Nanostrukturen (18) aus Kohlenstoff sind.

6. Kollektor-Elektroden-Anordnung nach einem der vorangehenden Ansprüche, **dadurch gekennzeichnet, dass** die Schicht (14) aus Diamant-Nanopartikeln durch Aufbringen in Dampfphase aus dem Zerfall eines kohlenstoffhaltige Gases hergestellt ist.

7. Kollektor-Elektroden-Anordnung nach einem der vorangehenden Ansprüche, **dadurch gekennzeichnet, dass** die Schicht (14) aus Diamant-Nanopartikeln mit Bor dotiert ist.

8. Kollektor-Elektroden-Anordnung nach einem der vorangehenden Ansprüche, **dadurch gekennzeichnet, dass** das Substrat (8) aus einer flexibel Metallfolie gebildet ist.

9. Speichervorrichtung (2), **dadurch gekennzeichnet, dass** sie zwei Kollektor-Elektroden-Anordnungen (4) nach einem der Ansprüche 1 bis 8 aufweist, die gegenüber angeordnet sind, wobei die Elektroden (10) mit einem Elektrolyt (16) in Kontakt sind und von einem Separator (6) getrennt sind, und **dadurch gekennzeichnet, dass** der Elektrolyt ein wässriger Elektrolyt ist.

10. Verfahren zur Herstellung einer Kollektor-Elektroden-Anordnung (4) nach einem der Ansprüche 1 bis 8, die für die Integration in eine Stromspeichervorrichtung (2) geeignet ist, **dadurch gekennzeichnet, dass** es die folgenden Schritte umfasst:
- Aufbringen einer Monoschicht eines geladenen organischen Polymers durch Eintauchen (22) eines mit einem Nanostrukturnetz bedeckten Substrats in eine wässrige Lösung des Polymers, Spülen (24) in deionisiertem Wasser mit darauffolgendem Trocknen (26) unter Argonstrom,
- Eintauchen (28) des mit einem Nanostrukturnetz bedeckten Substrats, das nach Anwendung der vorangehenden Schritte erhalten wurde, in eine wässrige oder alkoholische Diamant-Nanopartikel-Lösung mit einer Oberflächenladung entgegengesetzt zu der des aufgebrachten Polymers, und
- Wachstum durch Aufbringen in Dampfphase (34) aus dem Zerfall eines kohlenstoffhaltige Gases, wobei die Temperatur des Substrats, das das Nanostrukturnetz aufweist, unter oder gleich 600 °C ist, wobei der Druck zwischen 20 mbar und 200 mbar inklusive ist, wobei das Wachstum, wenn ein bedeckender Diamant-Nanopartikel-Film hergestellt ist, gestoppt wird.

11. Herstellungsverfahren nach Anspruch 10, **dadurch gekennzeichnet, dass** das kohlenstoffhaltige Gas aus Wasserstoff und Methan zusammengesetzt ist.

## Claims

1. A collector-electrode assembly (4) capable of being integrated into an electric energy storage device (2), including, as a superposition, a highly conductive collector including a substrate (8) and an electrode (10) including a nanostructured active layer (12) formed with a network of nanostructures (18), **characterized in that** said nanostructured active layer (12) is covered with a layer (14) including diamond nanoparticles (20).

2. The collector-electrode assembly according to claim 1, **characterized in that** said network of nanostructures is formed with nanostructures (18) erected while growing on the surface of the substrate (8) and spaced apart from each other by a distance greater than a predetermined minimum distance.

3. The collector-electrode assembly according to claim 2, **characterized in that** said predetermined minimum distance is greater than or equal to three times the maximum diameter of the diamond nanoparticles.

4. The collector-electrode assembly according to any of the preceding claims, **characterized in that** said nanostructures (18) have a geometrical shape from among one of the following geometrical shapes: tubular, wire, conical shape.

5. The collector-electrode assembly according to any of the preceding claims, **characterized in that** said nanostructures (18) are in carbon.

6. The collector-electrode assembly according to any of the preceding claims, **characterized in that** the layer (14) of diamond nanoparticles is obtained by vapor deposition from the decomposition of a carbonaceous gas.

7. The collector-electrode assembly according to any of the preceding claims, **characterized in that** the layer (14) of diamond nanoparticles is doped with boron.

8. The collector-electrode assembly according to any of the preceding claims, **characterized in that** the substrate (8) is formed with a flexible metal sheet.

9. An electric energy storage device (2) **characterized in that** it includes two collector-electrode assemblies (4) according to any of claims 1 to 8, positioned facing each other, the electrodes (10) being in contact with an electrolyte (16) and separated by a separator (6), and **characterized in that** said electrolyte is an aqueous electrolyte.

10. A method for manufacturing an collector-electrode assembly (4) according to any of claims 1 to 8, capable of being integrated into an electric energy storage device (2), **characterized in that** it includes the following steps:
- depositing a monolayer of a charged organic polymer, by soaking (22) a substrate covered with a network of nanostructures in an aqueous solution of said polymer, rinsing (24) in deionized water and then drying (26) under argon flow,
- soaking (28) the substrate covered with a network of nanostructures obtained after applying the preceding steps in an aqueous or alcoholic solution of diamond nanoparticles including an opposite surface charge to that of the deposited polymer, and
- growing by vapor deposition (34) from the decomposition of a carbonaceous gas, the temperature of the substrate including the network of nanostructures being less than or equal to 600°C, the pressure being comprised between 20 mbars and 200 mbars, the growth being stopped when a covering diamond nanoparticle film is obtained.

11. The manufacturing method according to claim 10, **characterized in that** the carbonaceous gas consists of hydrogen and methane.
